# FASCICULE DE BREVET EUROPEEN

(11) **EP 2 377 742 B1**
(45) Date de publication et mention de la délivrance du brevet: **19.09.2012**
(21) Numéro de dépôt: 11160607.5
(22) Date de dépôt: 31.03.2011
(51) Int. Cl.: B62D 1/184

(54) **Mécanisme de réglage d'une colonne de direction de véhicule automobile**
Verstellmechanismus für eine Lenksäule eines Kraftfahrzeugs
Mechanism for adjusting a steering column of a vehicle

(30) Priorité: 13.04.2010 FR 1052787
(43) Date de publication de la demande: 19.10.2011
(73) Titulaire: Jtekt Europe, 69540 Irigny (FR)
(72) Inventeur: Bischoff, Philippe, 69360 Saint Symphorien d'0zon (FR)
(74) Mandataire: Chevalier, Renaud Philippe

(56) Documents cités:
- EP-A2- 2 055 612
- WO-A1-2010/122958
- GB-A- 2 454 345
- US-A1- 2011 185 839

## Description

La présente invention se rapporte, d'une manière générale, aux systèmes de direction des véhicules automobiles. Cette invention s'intéresse plus précisément aux colonnes de direction et elle concerne, encore plus particulièrement, un mécanisme de réglage d'une colonne de direction de véhicule automobile.

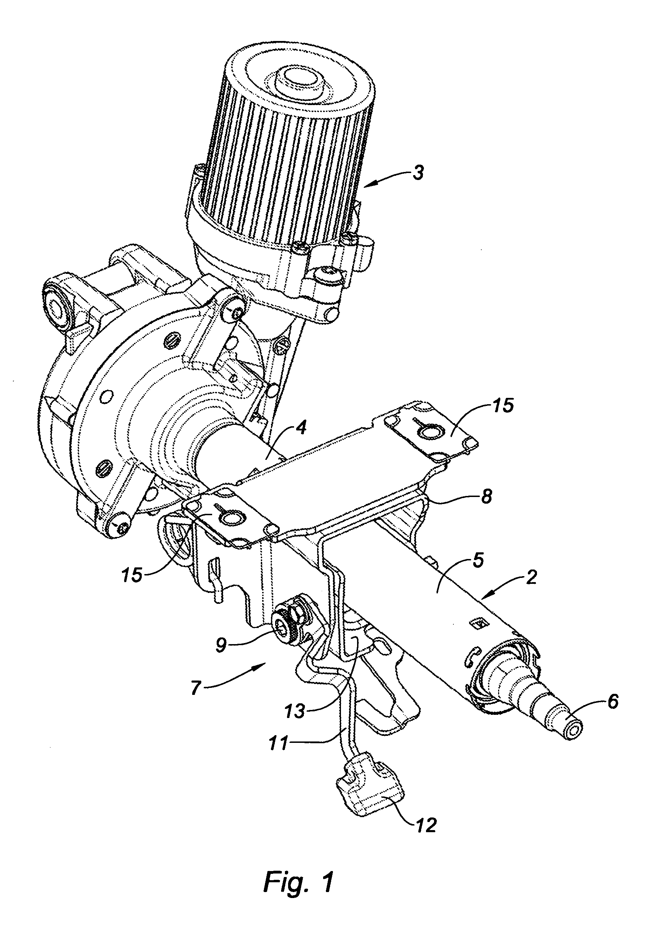

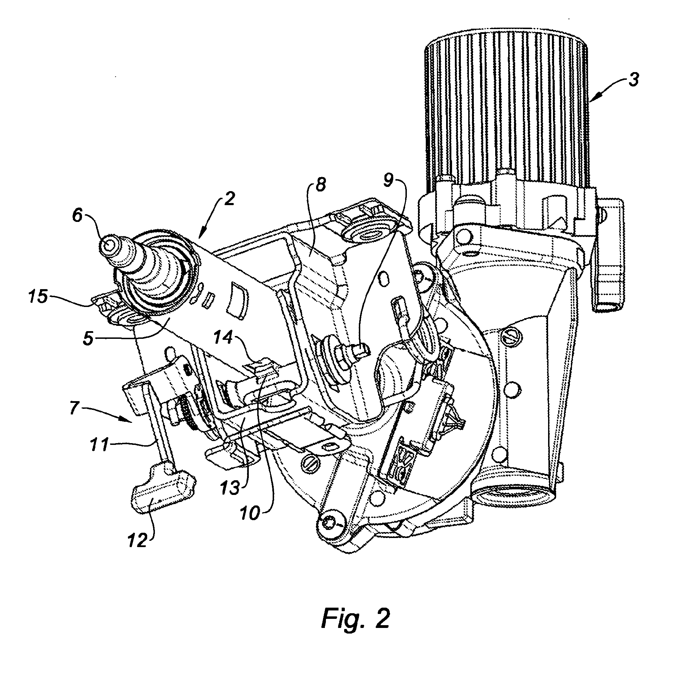

Certaines colonnes de direction équipant les véhicules automobiles possèdent un mécanisme de réglage, qui permet de modifier la position du volant de conduite en hauteur et en profondeur, de manière à l'adapter au mieux à la taille du conducteur du véhicule, et à sa position de conduite. Un exemple de mécanisme de réglage d'une colonne de direction est illustré sur les figures 1 et 2 du dessin annexé, le mécanisme de réglage ici représenté étant appliqué à une colonne de direction 2 d'un véhicule avec dispositif d'assistance électrique 3 de la direction, le dispositif d'assistance 3 agissant sur la partie basse de la colonne de direction 2.

Cette colonne de direction 2 comporte un tube intérieur 4 formant la partie basse de la colonne, et un tube extérieur 5 formant la partie haute de la colonne, au sommet de laquelle dépasse un élément 6 de liaison avec le volant de conduite (non représenté). Le tube extérieur 5 est monté coulissant axialement sur le tube intérieur 4, pour le réglage en profondeur de la position du volant.

Le mécanisme de réglage, désigné dans son ensemble par la référence 7, est associé à une bride de fixation supérieure 8 de la colonne de direction 2. Ce mécanisme de réglage 7 comprend un axe transversal 9, s'étendant sous le tube 5 et au travers de la bride 8, l'axe 9 portant dans sa partie centrale une came 10, et étant relié latéralement à un levier de commande 11, se terminant par une poignée 12.

L'axe transversal 9 du mécanisme de réglage 7 comporte une liaison de type glissière, sensiblement verticale, avec la bride de fixation supérieure 8 de la colonne de direction 2. Cet axe transversal 9 comporte une autre liaison de type glissière, parallèle à l'axe de la colonne de direction 2, avec une bride inférieure 13 qui est insérée dans la bride de fixation supérieure 8 et qui est solidaire du tube extérieur 5.

Le verrouillage de la colonne de direction 2, dans la position réglée, s'effectue en faisant pivoter le levier de commande 11 donc aussi l'axe 9jusqu'en butée, en créant ainsi par l'intermédiaire de cames, d'une part, un pincement entre la bride inférieure 13 et la bride de fixation supérieure 8, et d'autre part, une pression exercée par la came 10 sur le tube intérieur 4, au travers d'une ouverture 14 du tube extérieur 5. Le tube intérieur 4 vient alors en appui contre le tube extérieur 5. Le mécanisme 7 est ainsi bloqué en tous sens, ce qui permet de conserver la position réglée.

Le document de brevet EP 2055612 A2 illustre cet état de la technique.

Comme l'illustrent aussi les figures 1 et 2, certaines colonnes de direction possèdent aussi une fonction d'absorption d'énergie en cas de choc subi par le véhicule. Cette fonction est réalisée par rétraction, notamment entre d'une part le tube extérieur 5 et la bride de fixation supérieure 8 de la colonne de direction 2 rendus solidaires l'un de l'autre par le verrouillage du mécanisme 7, et d'autre part un ensemble de cellules détachables 15 prévues aux points de fixation de la bride supérieure 8 sur le support de colonne de direction (non représenté) lié à la structure du véhicule. En particulier, si la liaison est glissante au niveau du mécanisme 7 c'est-à-dire si en position verrouillée l'effort axial de maintien du réglage télescopique est inférieur à l'effort de décrochement des cellules détachables 15, le tube extérieur 5 solidaire de la bride inférieure 13 vient d'abord en appui sur l'axe transversal 9, avant que les cellules détachables 15 se décrochent. La fonction de rétraction, ainsi réalisée, permet notamment encas d'impact frontal du véhicule d'amortir le choc du conducteur sur le volant par une compression de la colonne de direction 2 sur une partie de sa longueur. L'absorption de l'énergie du choc est ici réalisée selon une courbe effort/déplacement à ajuster sur la base d'essais de choc effectués à l'aide d'un mannequin ; cette courbe est caractérisée en particulier par la valeur de l'effort de décrochement sur le début de la courbe, et par le rapport effort/déplacement sur le restant de la courbe.

Lorsqu'elles combinent un mécanisme de réglage tel que décrit précédemment, et une fonction de rétraction réalisée comme il vient d'être rappelé ou analogue, les colonnes de direction existantes présentent un inconvénient, qui se manifeste lors de l'opération de réglage de la position du volant, la colonne de direction étant alors déverrouillée.

A ce moment, si le conducteur pousse ou tire brusquement le volant, donc la colonne de direction, et que celle-ci vient heurter sa butée télescopique de fin de course, l'effort ainsi créé sur la colonne peut dépasser l'effort de décrochement du système d'absorption d'énergie à cellules détachables, et la colonne de direction qui n'est alors plus tenue peut tomber sur les genoux du conducteur, avec les risques de blessure que cela comporte, à ceci s'ajoutant le problème de la remise en place de la colonne de direction.

La présente invention vise à éviter cet inconvénient, et elle a donc pour but de proposer une solution empêchant une tombée de la colonne de direction au moment du réglage, même en cas d'effort important appliqué sur le volant et transmis à cette colonne, et ceci malgré la présence de cellules détachables entre la bride de fixation supérieure et le support de colonne de direction.

A cet effet, l'invention a pour objet un mécanisme de réglage d'une colonne de direction de véhicule automobile, la colonne de direction comprenant un tube intérieur et un tube extérieur monté coulissant axialement sur le tube intérieur, et le mécanisme de réglage comprenant une bride de fixationsupérieure, une bride inférieure insérée dans la bride de fixation supérieure et un axe transversal muni d'une came et d'un levier de commande, ledit axe traversant les deux brides et la came étant prévue pour coopérer avec le tube intérieur en passant au travers d'une ouverture du tube extérieur en vue de réaliser un verrouillage dans une position réglée, par appui du tube intérieur contre le tube extérieur, tandis que dans une position déverrouillée résultant d'une rotation de l'axe transversal la came libère l'appui du tube intérieur contre le tube extérieur, ce mécanisme de réglage étant caractérisé en ce que sont associés à la came, sur l'axe transversal, des moyens de blocage longitudinal temporaire de la bride de fixation supérieure par rapport au tube intérieur, ces moyens de blocage étant désactivés dans la position de verrouillage.

Dans un mode de réalisation préféré de l'invention, particulièrement simple, les moyens de blocage temporaire sont constitués par un ergot saillant radialement de l'axe transversal, au niveau de la came, et prévu pour s'introduire dans un trou prévu dans le tube intérieur , lorsque l'axe précité est tourné avec sa came vers la position déverrouillée.

Ainsi, l'idée à la base de la présente invention consiste à modifier ou adapter la came portée par l'axe transversal, par l'ajout d'un ergot ou autre organe mécanique dont la fonction est la réalisation d'un blocage longitudinal de la bride supérieure du mécanisme de réglage sur le tube intérieur, blocage qui est rendu actif seulement lorsque la came tourne lors de l'opération de déverrouillage, réalisée en vue du réglage de la position du volant par le conducteur. Le blocage temporaire, ainsi réalisé, permet de résister à un effort ou un choc important appliqué sur le volant suivant l'axe de la colonne de direction, indépendamment de l'effort de décrochement du système d'absorption d'énergie de cette colonne de direction, tel qu'il résulte des cellules détachables associées à la bride de fixation.

L'invention sera mieux comprise à l'aide de la description qui suit, en référence au dessin schématique annexé représentant, à titre d'exemple, une forme d'exécution de ce mécanisme de réglage d'une colonne de direction de véhicule automobile.
Figures 1 et 2 (déjà mentionnées) sont des vues en perspective illustrant des mécanismes de réglage selon l'état de la technique ;
Figure 3 est une vue en coupe passant par l'axe d'une colonne de direction avec son mécanisme de réglage conforme à la présente invention, représenté en position verrouillée ;
Figure 4 est une vue en coupe similaire à la figure 3, mais représentant le mécanisme de réglage dans la position déverrouillée.

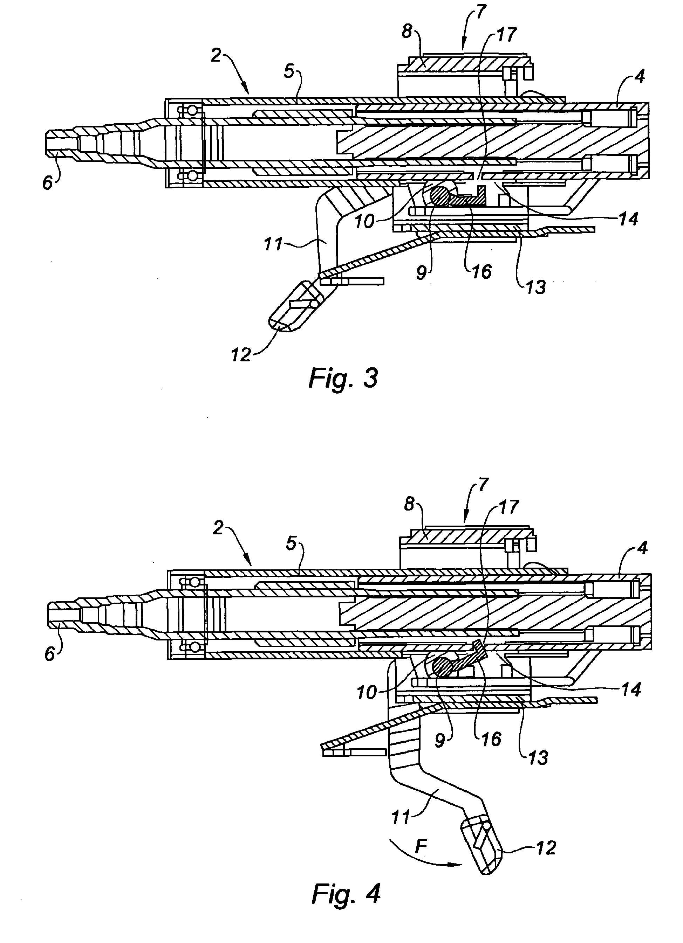

Les figures 3 et 4 montrent partiellement une colonne de direction 2 avec son mécanisme de réglage 7, les éléments correspondant à ceux précédemment décrits (en référence aux figures 1 et 2) étant désignés par les mêmes références numériques et ne faisant pas ici l'objet d'une nouvelle description.

Selon l'invention, un ergot 16 est solidaire en rotation de la came 10, donc aussi de l'axe transversal 9. L'ergot 16 s'étend essentiellement dans une orientation radiale, relativement à l'axe 9, l'extrémité libre de cet ergot 16 pouvant être coudée pour former une sorte de crochet.

Le tube intérieur 4 de la colonne de direction 2 comporte un trou 17, ménagé dans sa paroi en regard de l'ouverture 14 du tube extérieur 5, et aussi en regard de l'ergot 16.

En position verrouillée, comme montré sur la figure 3, la came 10 est pressée contre le tube intérieur 4, au travers de l'ouverture 14 du tube extérieur 5. Par contre, l'ergot 16 reste à l'écart du tube extérieur 5 et, à plus forte raison, du tube intérieur 4.

Lors de déverrouillage de la colonne de direction 2 par actionnement en rotation du levier de commande 11 avec poignée 12 selon la flèche F, comme le montre la figure 4, l'ergot 16 pivote avec l'axe 9 et il s'engage ainsi, au travers de l'ouverture 14 du tube extérieur 5, dans le trou 17 du tube intérieur 4. Ainsi, l'ergot 16 bloque la translation longitudinale de la bride de fixation 8 par rapport au tube intérieur 4. En effet, la liaison de type glissière verticale réalisée entre l'axe 9 et la bride de fixation 8 n'a pas de jeu par rapport à cette bride de fixation, dans le sens axial de la colonne de direction, donc le fait de rendre l'axe 9 solidaire du tube intérieur 4 par l'ergot 16 provoque, par l'intermédiaire de cet axe 9, le blocage longitudinal de la bride de fixation 8. L'immobilisation temporaire ainsi obtenue permet à la colonne de direction 2 de résister à un effort élevé ou à un choc appliqué au volant, en position déverrouillée de la colonne de direction 2 et en particulier lors de l'opération de réglage par le mécanisme 7.

On ne s'écarterait pas du cadre de l'invention, telle que définie dans les revendications annexes :
- en adaptant la solution ici proposée, en particulier la forme de l'ergot, selon le sens de la rotation du levier de commande utilisé pour verrouiller le mécanisme, sachant qu'on peut effectuer le verrouillage en poussant sur le levier ou en tirant sur le levier, selon les réalisations ;
- en appliquant l'invention à des colonnes de direction dont le mécanisme de réglage ou le système d'absorption d'énergie par rétraction différeraient quelque peu de ceux ici décrits ;
- en destinant ce mécanisme de réglage à des systèmes de direction de tous types, assistées ou non, et avec tout genre d'assistance électrique ou hydraulique dans le cas de directions assistées.

## Revendications

1. Mécanisme de réglage (7) d'une colonne de direction (2) de véhicule automobile, la colonne de direction (2) comprenant un tube intérieur (4) et un tube extérieur (5) monté coulissant axialement sur le tube intérieur (4), et le mécanisme de réglage (7) comprenant une bride de fixation supérieure (8), une bride inférieure (13) insérée dans la bride de fixation supérieure (8) et un axe transversal (9) muni d'une came (10) et d'un levier de commande (11, 12), ledit axe (9) traversant les deux brides (8, 13) et la came (10) étant prévue pour coopérer avec le tube intérieur (4) en passant au travers d'une ouverture (14) du tube extérieur (5) en vue de réaliser un verrouillage dans une position réglée, par appui du tube intérieur (4) contre le tube extérieur (5), tandis que dans une position déverrouillée résultant d'une rotation de l'axe transversal (9) la came (10) libère l'appui du tube intérieur (4) contre le tube extérieur (5), **caractérisé en ce que** sont associés à la came (10), sur l'axe transversal (9), des moyens (16) de blocage longitudinal temporaire de la bride de fixation supérieure (8) par rapport au tube intérieur (4), ces moyens de blocage étant désactivés dans la position de verrouillage.

2. Mécanisme de réglage selon la revendication 1, **caractérisé en ce que** les moyens de blocage temporaire sont constitués par un ergot (16) saillant radialement de l'axe transversal (9), au niveau de la came (10), et prévu pour s'introduire dans un trou (17) prévu dans le tube intérieur (4), lorsque l'axe (9) est tourné avec sa came (10) vers la position déverrouillée.

## Claims

1. A mechanism (7) for adjusting a motor vehicle steering column (2), the steering column (2) comprising an inner tube (4) and an outer tube (5) axially slidingly mounted on the inner tube (4), and the steering mechanism (7) comprising an upper fastening flange (8), a lower flange (13) inserted into the upper fastening flange (8), and a transverse axis (9) provided with a cam (10) and a control lever (11, 12), said axis (9) passing through the two flanges (8, 13) and the cam (10) being provided to cooperate with the inner tube (4) by passing through an opening (14) of the outer tube (5) so as to perform locking in an adjusted position, by bearing of the inner tube (4) against the outer tube (5), while in an unlocked position resulting from a rotation of the transverse axis (9), the cam (10) frees the bearing of the inner tube (4) against the outer tube (5), **characterized in that** associated with the cam (10), on the transverse axis (9), are means (16) for temporary longitudinal blocking of the upper fastening flange (8) relative to the inner tube (4), said blocking means being deactivated in the locking position.

2. The adjustment mechanism according to claim 1, **characterized in that** the temporary blocking means are made up of a lug (16) radially protruding from the transverse axis (9), at the cam (10), and provided to be inserted into a hole (17) provided in the inner tube (4), when the axis (9) is turned with its cam (10) toward the unlocked position.

## Patentansprüche

1. Verstellmechanismus (7) für eine Lenksäule (2) eines Kraftfahrzeugs, wobei die Lenksäule (2) ein inneres Rohr (4) und ein äußeres Rohr (5) umfasst, das axial gleitend auf dem inneren Rohr (4) montiert ist, und der Verstellmechanismus (7) einen oberen Befestigungsflansch (8), einen unteren Flansch (13), der in den oberen Befestigungsflansch (8) eingeführt ist und eine transversale Welle (9), die mit einem Nocken (10) und einem Steuerhebel (11, 12) ausgestattet ist, umfasst, wobei die Welle (9), die die zwei Flansche (8, 13) und den Nocken (10) durchquert, dazu vorgesehen ist, mit dem inneren Rohr (4) zusammenzuarbeiten, indem sie eine Öffnung (14) des äußeren Rohrs (5) durchquert, um durch Abstützung des inneren Rohrs (4) auf dem äußeren Rohr (5) eine Verriegelung in einer verstellten Position durchzuführen, wogegen der Nocken (10) in einer entriegelten Position, die aus einer Rotation der transversalen Welle (9) resultiert, die Abstützung des inneren Rohrs (4) auf dem äußeren Rohr (5) freigibt, **dadurch gekennzeichnet, dass** dem Nocken (10) auf der transversalen Welle (9) Mittel (16) zur befristeten Blockade in Längsrichtung des oberen Befestigungsflanschs (8) im Verhältnis zum inneren Rohr (4) zugeordnet sind, wobei diese Blockiermittel in der Verriegelungsposition deaktiviert sind.

2. Verstellmechanismus nach Anspruch 1, **dadurch gekennzeichnet, dass** die befristeten Blockiermittel von einem auf Ebene des Nockens (10) radial zur transversalen Welle (9) hervorstehenden Sporn (16) gebildet werden, der dazu vorgesehen ist, in ein Loch (17) einzugreifen, das im inneren Rohr (4) vorgesehen ist, wenn die Welle (9) mit ihrem Nocken (10) in die entriegelte Position gedreht ist.
